# EUROPÄISCHE PATENTSCHRIFT

(11) **EP 2 502 850 B1**
(45) Veröffentlichungstag und Bekanntmachung des Hinweises auf die Patenterteilung: **01.02.2017**
(21) Anmeldenummer: 12160830.1
(22) Anmeldetag: 22.03.2012
(51) Int. Cl.: B65D 81/38

(54) **Verpackungsbehälter und Verfahren zu seiner Herstellung**
Packaging container and process for its manufacture
Récipient d'emballage et son procédé de fabrication

(30) Priorität: 24.03.2011 DE 102011001548
(43) Veröffentlichungstag der Anmeldung: 26.09.2012
(73) Patentinhaber: Paccor Deutschland GmbH, 56856 Zell (Mosel) (DE)
(72) Erfinder:
(74) Vertreter: Hutzelmann, Gerhard

(56) Entgegenhaltungen:
- DE-A1- 1 909 552
- DE-A1- 19 840 841
- DE-A1-102007 024 254
- DE-U- 1 807 461
- DE-U1-202010 008 367
- US-A- 3 057 537
- US-A1- 2010 108 693

## Beschreibung

Die Erfindung bezieht sich auch einen Verpackungsbehälter mit einem Innenteil und einem Außenteil, sowie ein Verfahren zu seiner Herstellung.

Es sind verschiedene Verpackungen dieses Typs bekannt, bei denen das Innenteil ein schalen- oder becherförmiges Behältnis bildet und das Außenteil das Innenteil wenigstens teilweise umschließt, wobei das Innenteil aus einem formbaren, insbesondere thermoformbaren und/oder tiefziehbaren Material ein- oder mehrstückig hergestellt ist, wobei als Material neben herkömmlichen Kunststoffen auch wenigstens teilweise ein aus nachwachsenden, biologisch abbaubaren und/oder recycelten Rohstoffen hergestelltes Material vorgesehen sein kann und wobei das Außenteil wenigstens den Umfang des Innenteils wenigstens teilweise umschließt und neben herkömmlichen Materialien vorzugsweise aus einem nachwachsenden, biologisch abbaubaren und/oder recycelten Rohstoff hergestellt ist, wobei vorzugsweise faserhaltige Materialien vorgesehen sind.

Aus der DE 20 2010 008367 U1 ist ein Becher aus einem Innenteil und einem Außenteil bekannt, der einen gerollten Rand aufweist.

Aus der DE 10 2007 024254 A1 ist ein weiterer mehrteiliger Becher mit gerolltem Rand bekannt.

Aus der DE 19 09 552 A1 sind tiefgezogene Becher aus thermoplastischem Werkstoff bekannt.

Aus der DE 198 40 841 A1 ist ein wärmeisolierender Becher mit einem Innenteil und einem Außenteil bekannt, wobei der Becher einen gerollten Rand aufweist.

Aus der US 2010/108 693 A1 ist ein weiterer wärmeisolierender Becher doppelwandiger Konstruktion bekannt, der einen flanschartigen oder gerollten Rand aufweist.

Diese Verpackungen weisen jedoch erhebliche Nachteile auf.

So ist der Randbereich bei bekannten Verpackungen dieses Typs teilweise scharfkantig, weswegen diese eine erhebliche Verletzungsgefahr bedingen. Eine weitere Folge ist, daß diese damit nicht als Trinkbecher oder dergleichen geeignet sind.

Zudem hat es sich trotz oder aufgrund des relativ breiten Siegelrandes als problematisch erwiesen, dichte und sichere, aber dennoch leicht öffenbare Siegelungen zu erzeugen.

Der Erfindung liegt daher die Aufgabe zugrunde, eine Verpackung des vorgenannten Typs vorzuschlagen, die kein Verletzungsrisiko bietet und zudem dicht, sicher, aber dennoch leicht öffenbar mit einem Deckel oder einer Deckelfolie verschlossen werden kann.

Gelöst wird diese Aufgabe mit einem Verpackungsbehälter gemäß Anspruch 1 und ein Verfahren zum Herstellen eines Verpackungsbehälters gemäß Anspruch 5.

Damit wird eine Mundrolle hergestellt, wie sie vor allem bei Trinkbechern aus Papier und Kunststoff oftmals eingesetzt wird. Scharfe Kanten werden völlig vermieden. Zudem wird hierdurch eine zusätzliche Verwendung als Trinkbecher eröffnet. U-Profile werden oftmals bei schalenartigen Verpackungen wie zum Beispiel Margarineschalen oder dergleichen eingesetzt.

Eine weitere erfindungsgemäß sehr vorteilhafte Ausgestaltung der Erfindung liegt vor, wenn auf den Rand ein Deckel oder eine Deckelfolie aufgesiegelt und/oder aufgesetzt bzw. aufgeschnappt ist.

Durch die schmale Verbindungslinie zwischen Rand und Deckel wird auch nur eine schmale Siegellinie erzeugt, zu deren Herstellung einerseits vergleichsweise wenig Energie benötigt wird und andererseits eine leichte Öffenbarkeit gewährleistet ist. Wenn ein Schnappdeckel aufgesetzt ist, wird eine sehr gute Abdichtung zwischen dem Rand und dem Deckel erzielt, so daß der Becher auch gegenüber flüssigen Produkten dicht verschlossen ist. Diese gute Abdichtung wird durch die abgerundete Ausgestaltung des Randes erzielt, der sich sehr gut an die Innenseite des Deckels anzulegen vermag. Der Deckel kann dabei aus tiefgezogenem, spritzgegossenem oder anderweitig geformten Kunststoffmaterial aber auch beispielsweise aus Papier, Pappe oder Karton geformt sein. In diesem Zusammenhang ist es auch denkbar, daß der Deckel einen zur Innenseite der Seitenwand parallelen Abschnitt aufweist, der sich zur zusätzlichen Abdichtung dort anzulegen vermag.

Gemäß einer Fortbildung der Erfindung ist es auch sehr vorteilhaft, wenn sowohl Innenteil als auch Außenteil einen gerollten Rand aufweisen.

Hierdurch wird auch eine sehr gute Befestigung zwischen Innenteil und Außenteil gewährleistet. Die beiden gerollten Ränder greifen dabei ineinander.

Gemäß dem erfindungsgemäßen Verfahren ist es äußerst vorteilhaft, wenn zunächst die Kombination aus Innenteil und Außenteil gebildet und anschließend der Rand geformt wird oder daß der Rand zuerst geformt und dann Außenteil und Innenteil zusammengeführt werden.

In beiden Fällen kann eine haltbare Verbindung zwischen Innenteil und Außenteil geschaffen werden.

Dabei hat es sich als sehr vorteilhaft erwiesen, wenn Innenteil und Außenteil getrennt geformt werden und anschließend zusammengeführt werden.

Ebenfalls sehr vorteilhaft ist es auch, wenn das Innenteil in das vorgeformte Außenteil hinein geformt wird und so die beiden Teile zusammengeführt werden.

In beiden Fällen kann eine innige, aber dennoch nach Gebrauch wieder trennbare Verbindung zwischen Innenteil und Außenteil geschaffen werden.

Sehr vorteilhaft ist es auch, wenn der Rand durch gezieltes Aufweiten des Verpackungsbehälters gebildet wird.

Damit wird auf einfache Art und Weise ein nahtloser Übergang zwischen Verpackungswand und Rand geschaffen.

Äußerst vorteilhaft ist es gemäß der Erfindung auch, wenn der Rand gerollt wird.

Damit lässt sich eine komfortable Mundrolle ohne scharfe Kanten schaffen.

Weiterhin hat es sich als äußerst vorteilhaft erwiesen, wenn das Außenteil des Verpackungsbehälters beim Aufweiten bzw. Rollen des Randes am Innenteil befestigt wird.

Hierdurch kann eventuell auf weitere Klebungen oder Rastungen verzichtet werden.

Besonders vorteilhaft ist es dabei, wenn das Außenteil wenigstens teilweise mit aufgeweitet bzw. gerollt wird.

Hierdurch wird eine besonders feste Verbindung zwischen Innenteil und Außenteil geschaffen.

Ebenfalls sehr vorteilhaft ist es erfindungsgemäß, wenn zwischen Rand und Innenteil eine Klemmnut für das Außenteil gebildet wird.

In dieser Klemmnut kann das Außenteil sicher befestigt werden.

Dabei hat es sich als besonders vorteilhaft erwiesen, wenn das Außenteil in die Klemmnut durch Verschieben des selben relativ zum Innenteil in diese hineingedrückt wird.

Damit lässt sich auch ein nachträglich mit einem Innenteil zusammengeführtes Außenteil sicher miteinander verbinden.

Im folgenden ist die Erfindung anhand eines Ausführungsbeispiels veranschaulicht.

Dabei zeigen:
- Fig. 1: ein Schaubild eines erfindungsgemäßen Bechers mit einem Innenteil und einem Außenteil, wobei am oberen Ende des Bechers eine Mundrolle als Rand vorgesehen ist,
- Fig. 2: einen Schnitt durch den Rand,
- Fig. 3: einen Schnitt durch den Rand mit einem aufgesetzten Deckel, und
- Fig. 4: einen Schnitt durch den Becher.

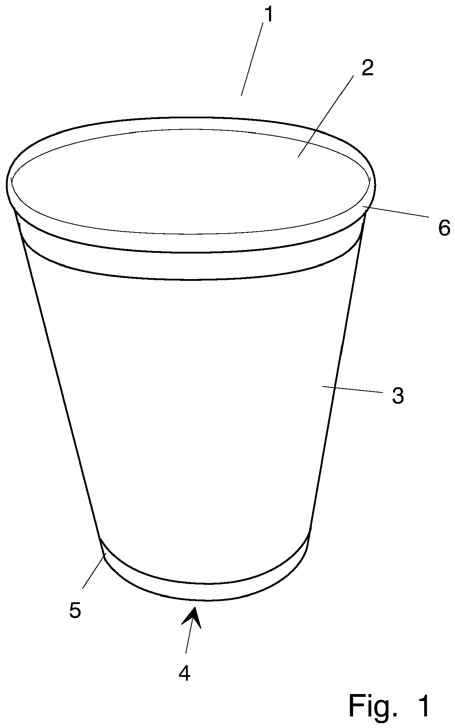

Mit 1 ist in Fig. 1 ein als Becher ausgebildeter Verpackungsbehälter bezeichnet, der im wesentlichen aus einem becherförmigen Innenteil 2 und einem mantelförmigen Außenteil 3 besteht.

Das Innenteil 2 ist dabei aus einem im wesentlichen runden Boden 4 und einer daran anschließenden Wand 5 aufgebaut, wobei sich dabei die Wand 5 vom Boden 4 her leicht konisch aufweitet.

Am vom Boden 4 abgewandten Ende der Wand 5 ist ein Rand 6 vorgesehen. Der Rand 6 ist dabei von Material der Wand 5 gebildet und nach außen umgerollt.

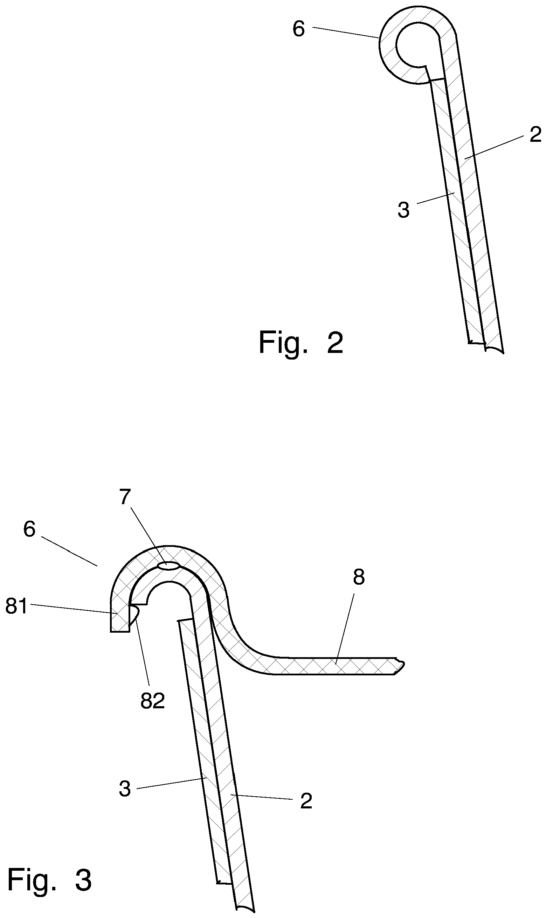

Wie in Fig. 2 dargestellt weist der umgerollte Rand 6 an seiner Oberseite einen flachen Bereich auf, in dem eine Siegelnaht 7 für einen Deckel 8 angeordnet sein kann, der den Becher zu verschließen vermag. Anstatt eines Deckels 8 kann auch eine Deckelfolie vorgesehen sein.

Zudem ist es denkbar, daß, wie in Fig. 3 dargestellt, ein Deckel 8 auf den Rand 6 aufgeschnappt ist. Dabei kann sich der nach unten geneigte Rand 81 des Deckels an der Unterseite des gerollten Randes 6 abstützen. Hierzu sind Vorspünge 82 vorgesehen, die vom Deckelrand nach innen ragen und unter den Rand 6 des Bechers 1 greifen. Der Rand 81 des Deckels liegt voll am äußeren Umfang des Randes 6 an. Eine ausreichende Pressung ist sichergestellt. Durch die gerollte Form ist der Rand 6 auch so stabil, daß die Pressung zum Deckelrand 81 hin auch über längere Zeit aufrecht erhalten werden kann, ohne daß der Rand 6 durch die Anpresskräfte deformiert wird. Es ist auch denkbar, daß der Deckel 8 an die Rolle des Randes 6 in seiner Form angepasst ist, und so zumindest an einer weiteren Stelle umlaufend am Rand 6 fest anliegt, wodurch eine zweite Abdichtebene geschaffen wird.

In diesem Zusammenhang ist es auch denkbar, daß der Deckel einen zur Innenseite der Seitenwand parallelen Abschnitt aufweist, der sich zur zusätzlichen Abdichtung dort anzulegen vermag. Damit wird eine nochmalige Abdichtung geschaffen, die besonders bei extrem dünnflüssigen Produkten vorteilhaft sein kann.

Durch diese Ausgestaltung ist eine sehr gute Dichtheit des Deckels 8 zum Becher 1 hin gewährleistet, die sehr nahe an eine Versiegelung herankommt. Dadurch wird es mit einem Schnappdeckel möglich, daß zum Beispiel dünnflüssige Füllgüter wie Getränke, Joghurt oder dergleichen vor dem Gebrauch geschüttelt und damit durchmischt werden. Es können auch aus mehreren Komponenten bestehende Produkte verpackt werden, die dann beim Konsumenten nach einem erstmaligen Öffnen der Verpackung zusammengebracht und dann nach Wiederaufsetzen des Deckels durch Schütteln oder Umstürzen durchmischt werden.

Die in diesem Zusammenhang eingesetzten Deckel können aus tiefgezogem, spritzgegossenem oder anderweitig geformtem Kunststoffmaterial bestehen. Ebenso denkbar ist der Einsatz von Papier, Pappe oder Kartondeckeln, die tiefgedrückt, oder anderweitig geformt sind. Auch Deckel aus Moulded-Fiber sind denkbar. Solche Deckel sollten jedoch auf ihrer Innenseite eine Resistenzschicht gegenüber dem Füllgut aufweisen.

Das Außenteil 3 ist entsprechend der Form des Innenteils 2 geformt und weist, wie in Fig. 1 dargestellt ausschließlich einen Mantel auf, der sich um die Seitenwand 5 des Innenteils 2 herumlegt. Dabei endet das Außenteil 3 direkt unter dem Rand 6 und knapp über dem Boden 4.

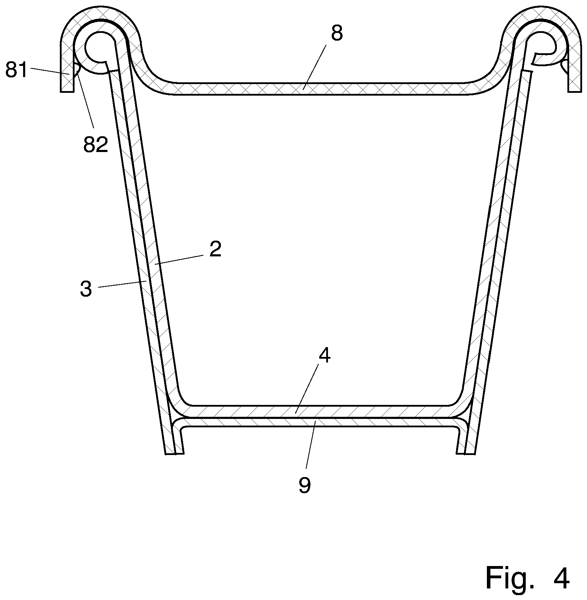

Es ist aber auch denkbar, daß das Außenteil 3 sich nur über einen Teil der Höhe der Seitenwand 5 erstreckt. Ebenso denkbar ist es, daß das Außenteil 3 sich zumindest genauso weit nach unten erstreckt wie das Innenteil 2. In diesem Zusammenhang kann das Außenteil 3 auch das Innenteil 2 überragen. Unter Umständen kann, wie in Fig. 4 dargestellt, auch ein zum Außenteil 3 gehörender Boden 9 vorgesehen sein, der mit der Wand des Außenteils 3 verbunden ist.

Durch die zweiteilige Ausgestaltung des Verpackungsbehälters 1 kann die Materialdicke des Innenteils 2 reduziert werden. Etwaige Nachteile bei der mechanischen Stabilität werden durch das Außenteil 3 ausgeglichen. Das Außenteil 3 stabilisiert den Verpackungsbehälter 1.

Durch die Reduzierung der Materialdicke des Innenteils 2 können teure Rohstoffe, wie sie für den direkten Kontakt mit Lebensmitteln eingesetzt werden müssen, eingespart werden. Das Außenteil 3 hingegen kann aus günstigeren Rohstoffen, vor allem auch aus recycelten Rohstoffen hergestellt sein.

Eine solche Ausgestaltung wird oftmals schon für Joghurtbecher eingesetzt.

Bei den dort auftretenden feuchten Produktions- und Lagerbedingungen ist es oftmals zweckdienlich, wenn das Außenteil 3, welches oftmals aus Papier oder Karton hergestellt wird, mit einer Druckfarbe oder auch mit einer Imprägnierung oder Beschichtung zum Beispiel auf Basis von Wachsen ausgerüstet wird, um dieses feuchtigkeitsunempfindlich zu machen.

Schnittkanten des Außenteils 3 können umgelegt sein, damit diese nicht offen liegen.

Der umgerollte Rand 6 wird gemäß einer vorzugsweisen Ausgestaltung der Erfindung erst dann geformt, wenn das Innenteil 2 und das Außenteil 3 zusammengeführt sind.

Dabei kann das obere Ende des Außenteils 3 durch den Rand 6 abgedeckt werden, so daß auch hier die Schnittkante nicht offen liegt. Zudem kann das Außenteil 3 durch den Rand 6 gehalten werden. Durch die Umrollung entsteht ein Kanal 10, der als Klemmkanal dient. Durch die Klemmung in diesem Kanal 10 wird das Außenteil 3 am Innenteil 2 befestigt. Es kann dadurch ganz oder teilweise auf weitere Befestigungen zwischen Innenteil 2 und Außenteil 3 verzichtet werden. Die weiteren Befestigungen können beispielsweise durch Klebungen und/oder Rastungen geschaffen werden.

Es ist in diesem Zusammenhang auch denkbar, daß das obere Ende des Außenteils 3 zusammen mit dem Innenteil nach außen umgerollt wird, wodurch eine nochmals besser Abdeckung und Befestigung des oberen Endes des Außenteils 3 gewährleistet wird.

Je nach Anwendung kann die Umrollung auch ganz oder teilweise erfolgen. Im dargestellten Ausführungsbeispiel beträgt die Umrollung etwa 270°. Es ist aber auch denkbar, daß die Umrollung kleiner oder größer ausfällt.

Bei einer stärkeren Umrollung, zum Beispiel bei der im Ausführungsbeispiel beschriebenen und dargestellten Umrollung von etwa 270° ist es denkbar, daß zumindest die Oberseite der sich durch die Umrollung ergebenden Mundrolle ein Bereich 11 flach gedrückt ist. In diesem flach gedrückten Bereich kann die Siegelnaht 7 angeordnet sein, die damit breiter ausfallen kann als bei einer kreisförmigen Umrollung. Es ist auch denkbar, daß der umgerollte Rand 6 als Widerlager für einen nicht dargestellten Schnappdeckel dient.

Das Zusammenführen von Innenteil 2 und Außenteil 3 kann entweder so erfolgen, daß die beiden Teile getrennt gefertigt und dann ineinander gesteckt werden. Es ist aber auch möglich, daß das Außenteil 3 um das Innenteil 2 herumgelegt und mit diesem verklebt oder anderweitig an diesem befestigt wird. Zudem kann das Innenteil 2 auch in das Außenteil 3 hinein tiefgezogen werden.

Für die Herstellung der Umrollung des Randes 6 sind ebenfalls verschiedene Verfahren denkbar. Gemäß einer bevorzugten Ausführung des erfindungsgemäßen Verfahrens soll jedoch zunächst das Innenteil 2 mit dem Außenteil 3 zusammengeführt werden. Anschließend wird die Umrollung durch Aufweitung und anschließende Umbördelung des vom Boden 4 abgewandten Endes der Seitenwand 5 des Innenteils 2 gebildet. Dabei kann das Außenteil 3 wenigstens teilweise mit umgerollt werden. Es ist aber auch denkbar, daß die Umrollung so plaziert wird, daß diese knapp oberhalb des Endes des Außenteils 3 angeordnet wird.

Wird zunächst die Umrollung des Innenteils 2 gebildet, so kann das Außenteil 3 auch über das Innenteil geschoben werden und in eine durch die Umrollung gebildete Nut 10 eingeschoben werden. In dieser Klemmnut wird das Außenteil 3 gehalten.

Ein Verpackungsbehälter 1 gemäß der vorliegenden Erfindung kann damit sehr gut für eher flüssige Nahrungsmittel eingesetzt werden. Der Einsatz zum Beispiel für Trinkjoghurt ist sehr vorteilhaft. Wenn der Inhalt getrunken wird, besteht nicht die Gefahr von Verletzungen an scharfen Kanten des Randes 6.

Der Verpackungsbehälter 1 kann nicht nur als Becher ausgebildet sein. Es sind auch schalenartige Behälter denkbar. Zudem ist die Erfindung nicht nur auf runde Verpackungsbehälter beschränkt. Es sind auch andere Formen denkbar. So ist beispielsweise auch eine rechteckige Form mit abgerundeten Ecken denkbar, wie sie gerne für Fertigsnacks Verwendung findet.

Nach dem Gebrauch des Verpackungsbehälters 1 kann dieser sehr leicht wieder in Innenteil 2 und Außenteil 3 getrennt werden.

Das Innenteil 2 wird oftmals aus Materialien wie PS, PE, PP, PET, PVC, aber auch Stärkepolymeren, Polymilchsäure (PLA) oder andere Materialien hergestellt. Denkbar sind aber je nach Füllgut auch faserhaltige Materialien wie Papier, Pappe, Feinkarton oder dergleichen, die dann aber mit einer Resistenzschicht gegenüber dem Inhalt ausgerüstet sein sollten, um ein Aufweichen des Innenteils 2 zu verhindern und damit eine Migration von Inhaltsstoffen des Innenteils 2 in das Füllgut hinein zu unterbinden.

Eine solche Resistenzschicht kann beispielsweise als Barriereschicht ausgebildet sein. Es sind aber auch Resistenzschichten denkbar, die wenigstens für eine definierte Zeitdauer Resistenzeigenschaften gegenüber dem Füllgut aufweisen. So kann beispielsweise ein beschichtetes oder imprägniertes Papier eingesetzt werden.

Als Beschichtung sind Kunststoffbeschichtungen ebenso denkbar, wie behandelte oder unbehandelte Papierlagen zum Beispiel aus Pergament, Pergamin, Pergament-Ersatz und/oder Pergaminersatz oder anderen die gewünschten Eigenschaften aufweisenden Papiere. Moulded-Fiber ist insbesondere denkbar, wenn die Oberfläche glatt ausgeführt ist.

Imprägnierungen beispielsweise auf Fettbasis sind auch denkbar.

In diesem Zusammenhang können auch mehrlagige Innenteile eingesetzt werden. Diese können einerseits eine oder mehrere Barriere- bzw. Resistenzschichten aufweisen, aber auch eine oder mehrere Tragschichten.

Als Barriereschichten sind beispielsweise auch EVOH, PA oder andere gebräuchliche Materialien mit Barriereeigenschaften denkbar. Diese können dann aber auch in extrem dünnen Schichten im Material des Innenteils 2 vorgesehen sein.

Oftmals werden, wie oben bereits beschrieben, die Innenteile 2 im Tiefziehverfahren hergestellt. Es ist aber auch denkbar, daß diese gewickelt werden oder anderweitig auch aus mehreren Stücken zusammengesetzt werden. Es ist in diesem Zusammenhang auch denkbar, daß anstatt eines Bechers 1 im klassischen Sinn mit einem runden Boden 4 auch ein eckiges Behältnis geschaffen wird. Gerade dann kann der Verpackungsbehälter 1 auch mehrteilig ausgebildet sein.

Insgesamt ist das Innenteil 2 erfindungsgemäß weich bzw. wenig steif ausgebildet. Dies kann einerseits eine Folge der Materialauswahl sein und andererseits eine Folge einer sehr geringen Wandstärke des Innenteils 2 darstellen.

Ziel der Erfindung ist es, möglichst wenig nicht oder schlecht biologisch abbaubare und/oder nicht nachwachsende Rohstoffe einzusetzen, aber dennoch den bekannten Komfort und die gewünschte Stabilität der Behälter zu erzeugen.

Deswegen werden die Wandstärken des Innenteils 2 reduziert und zusätzlich noch wenigstens weitgehend aus nachwachsenden und/oder biologisch abbaubaren Rohstoffen hergestellt.

Solche Rohstoffe sind jedoch sehr teuer, da diese besondere Eigenschaften vor allem im Hinblick auf Lebensmittelverträglichkeit und/oder Barriereeigenschaften aufweisen müssen. Dies ist damit ein weiterer Grund, diese Materialien möglichst sparsam einzusetzen.

Eine konstruktive Erhöhung der Stabilität des Innenteils 2 durch Verstärkungsrippen oder beispielsweise durch einen im Bodenbereich angeordneten, nach außen ragenden Wulst sind denkbar. Ein solcher Wulst kann dann zugleich als Rastkante für das Außenteil 3 und auch als Stapel- bzw. Entstapelungshilfe dienen.

Das Außenteil 3 stabilisiert und festigt die Seitenwand 5 des Innenteils 2.

Das Außenteil 3 wird im allgemeinen aus Papier, Pappe, Karton oder anderen Materialien hergestellt und kann auch aus Recyclingmaterialien bestehen. Dabei kann das Außenteil 3 auch mehrlagig ausgebildet sein. Das Außenteil 3 ist vergleichsweise unkritisch in Bezug auf Lebensmitteltauglichkeit, da das Füllgut nicht mit dem Außenteil in Kontakt kommt. Es ist auch denkbar, daß das Außenteil 3 aus Kunststoffen oder dergleichen hergestellt ist, wobei sich hier oftmals der Einsatz von Recycling-Kunststoffen anbietet.

Auf der Außenseite des Außenteils 3 kann ein Druckbild 11 vorgesehen werden. Um ein hochwertiges Druckbild 11 zu erhalten, kann die Außenseite mit einem besonders glatten und gut bedruckbaren Material beschichtet sein. Es sind hier Feinpapiere ebenso denkbar, wie entsprechend ausgerüstete Kunststoffe. In diesem Zusammenhang ist es auch denkbar, daß ein Unterlack unter dem eigentlichen Druckbild vorgesehen ist.

Um Abrieb der Druckfarben und/oder eine Beschädigung des Druckbildes zu vermeiden kann auch ein Überlack oder eine Schutzbeschichtung vorgesehen sein.

Das Außenteil 3 kann auch aus gewellten Materialien wie beispielsweise Wellpappe oder dergleichen gefertigt sein, die dann für eine sehr gute Isolierung des Verpackungsbehälters 1 dienen können oder wenigstens besonders angenehme taktile Eigenschaften aufweisen.

Eine Isolierung kann auch beispielsweise durch eine geschäumte Beschichtung zum Beispiel auf Basis von Stärkepolymeren geschaffen werden.

Isolierte Becher 1 eignen sich besonders für kalte oder heiße Füllgüter.

Das Außenteil 3 kann wenigstens partiell auch mit einer Schutzbeschichtung ausgerüstet sein, die diese unempfindlich gegenüber Feuchtigkeit, Flüssigkeit aber auch Fetten machen kann.

Gerade an den unteren und oberen Rändern des Außenteils 3 besteht die Gefahr, daß dort Feuchtigkeit, Flüssigkeit oder auch Fette eindringen können, da dort meistens offene Schnittkanten vorliegen.

Gerade in diesen Bereichen kann die Schutzbeschichtung vorgesehen sein. Es ist aber auch denkbar, daß die Kanten des Außenteils 3 nach innen umgefaltet sind und so die Schnittkanten geschützt werden und so das Eindringen von Feuchtigkeit, Flüssigkeit oder dergleichen vermieden wird.

In diesem Zusammenhang ist es auch denkbar, daß das Außenteil 3 durch eine entsprechende Ausrüstung wenigstens für eine definierte Zeitdauer Resistenzeigenschaften gegenüber diesen Stoffen aufweist. Dies kann beispielsweise auch durch eine Imprägnierung oder eine enstprechende Materialauswahl sichergestellt werden.

Das Außenteil 3 kann eine Sollbruchstelle 10 aufweisen, an der sich das Außenteil 3 öffnen und vom Innenteil 2 trennen lässt.

Innenteil 2 und Außenteil 3 können dann getrennt voneinander der Entsorgung zugeführt werden, obwohl dies bei einer Stoffauswahl wie oben beschrieben eigentlich nicht mehr erforderlich ist.

## Patentansprüche

1. Verpackungsbehälter (1), der als Becher ausgebildet ist, bestehend im wesentlich aus einem Innenteil (2) und einem mantelförmigen Außenteil (3), wobei das Innenteil (2) ein schalen- oder becherförmiges Behältnis bildet und das Außenteil (3) das Innenteil (2) wenigstens teilweise umschließt, wobei das Innenteil (2) aus einem formbaren, insbesondere thermoformbaren und/oder tiefziehbaren Material ein- oder mehrstückig hergestellt ist, wobei als Material neben herkömmlichen Kunststoffen auch wenigstens teilweise ein aus nachwachsenden, biologisch abbaubaren und/oder recycelten Rohstoffen hergestelltes Material vorgesehen sein kann und wobei das Außenteil (3) wenigstens den Umfang des Innenteils (2) wenigstens teilweise umschließt und neben herkömmlichen Materialien vorzugsweise aus einem nachwachsenden, biologisch abbaubaren und/oder recycelten Rohstoff hergestellt ist, wobei vorzugsweise faserhaltige Materialien vorgesehen sind, wobei zumindest das Innenteil (2) an seinem oberen bzw. offenen Ende einen im Querschnitt gesehenen gerollten Rand (6) aufweist, wobei der Querschnitt des Randes (6) einen Kreis oder einen Kreisabschnitt darstellt, **dadurch gekennzeichnet, daß** der gerollte Rand (6) an seiner Oberseite einen flachen Bereich aufweist, wobei in diesem flachen Bereich eine Siegelnaht zwischen Becher und einer Deckelfolie oder einem Deckel angeordnet sein kann, der den Becher zu verschließen vermag.

2. Verpackungsbehälter nach Anspruch 1 , **dadurch gekennzeichnet, daß** auf den Rand (6) ein Deckel (8) oder eine Deckelfolie aufgesiegelt und/oder aufgesetzt bzw. aufgeschnappt ist.

3. Verpackungsbehälter nach einem der vorangehenden Ansprüche, **dadurch gekennzeichnet, daß** sowohl Innenteil (2) als auch Außenteil (3) einen gerollten Rand (6) aufweisen.

4. Verfahren zum Herstellen eines Verpackungsbehälters nach einem der vorangehenden Ansprüche, **dadurch gekennzeichnet, daß** zunächst die Kombination aus Innenteil (2) und Außenteil (3) gebildet und anschließend der gerollte Rand (6) geformt wird oder daß der Rand (6) zuerst geformt und dann Außenteil (3) und Innenteil (2) zusammengeführt werden, wobei in beiden Fällen im gerollten Rand (6) an seiner Oberseite ein flacher Bereich gebildet wird.

5. Verfahren nach Anspruch 4, **dadurch gekennzeichnet, daß** Innenteil (2) und Außenteil (3) getrennt geformt werden und anschließend zusammengeführt werden.

6. Verfahren nach Anspruch 4, **dadurch gekennzeichnet, daß** das Innenteil (2) in das vorgeformte Außenteil (3) hinein geformt wird und so die beiden Teile zusammengeführt werden.

7. Verfahren nach Anspruch 6, **dadurch gekennzeichnet, daß** das Außenteil (3) des Verpackungsbehälters (1) beim Umrollen des Randes (6) am Innenteil (2) befestigt wird.

8. Verfahren nach Anspruch 7, **dadurch gekennzeichnet, daß** das Außenteil (3) wenigstens teilweise mit umgerollt wird.

9. Verfahren nach einem der Ansprüche 6 bis 8, **dadurch gekennzeichnet, daß** zwischen Rand (6) und Innenteil (2) eine Klemmnut für das Außenteil (3) gebildet wird.

10. Verfahren nach Anspruch 9, **dadurch gekennzeichnet, daß** das Außenteil (3) in die Klemmnut durch Verschieben des selben relativ zum Innenteil (2) in diese hineingedrückt wird.

## Claims

1. Packaging container (1) constructed as a pot, consisting substantially of an inner part (2) and a casing-shaped outer part (3), wherein the inner part (2) forms a dish-shaped or pot-shaped container and the outer part (3) at least partly surrounds the inner part (2), wherein the inner part (2) is constructed in single-part or multi-part form from a mouldable, particularly thermoformable and/or deep-drawable material, wherein apart from conventional plastics materials also a material produced from renewable, biologically degradable and/or recycled raw materials can be provided at least in part as the material and wherein the outer part (3) at least partly surrounds the circumference of the inner part (2) and apart from conventional materials is preferably produced from a renewable, biologically degradable and/or recycled raw material, wherein preferably materials with fibre content are provided, wherein at least the inner part (2) has at its upper or open end an edge (6), which is rolled as seen in cross-section, and wherein the cross-section of the edge (6) represents a circle or a section of a circle, **characterised in that** the rolled edge (6) has at its upper side a flat region, wherein a sealing seam between pot and a cover foil or a lid, which is capable of closing the pot, can be arranged in this flat region.

2. Packaging container according to claim 1, **characterised in that** a lid (8) or a cover foil is sealed on and/or placed or snapped onto the edge (6) of a cover (8).

3. Packaging container according to one of the preceding claims, **characterised in that** both the inner part (2) and outer part (3) have a rolled edge (6).

4. Method of producing a packaging container according to any one of the preceding claims, **characterised in that** initially the combination of inner part (2) and outer part (3) is formed and subsequently the rolled edge (6) is formed or that the edge (6) is initially formed and then the outer part (3) and inner part (2) are brought together, wherein in both cases a flat region is formed in the rolled edge (6) at its upper side.

5. Method according to claim 4, **characterised in that** the inner part (2) and outer part (3) are formed separately and subsequently brought together.

6. Method according to claim 4, **characterised in that** the inner part (2) is formed in the pre-shaped outer part (3) and thus the two parts are brought together.

7. Method according to claim 6, **characterised in that** the outer part (3) of the packaging container (1) is fixed to the inner part (2) during rolling over of the edge (6).

8. Method according to claim 7, **characterised in that** the outer part (3) is at least partly rolled over at the same time.

9. Method according to any one of claims 6 to 8, **characterised in that** a clamping groove for the outer part (3) is formed between the edge (6) and inner part (2).

10. Method according to claim 9, **characterised in that** the outer part (3) is pressed into the clamping groove by displacement of the same relative to the inner part (2) into this.

## Revendications

1. Récipient d'emballage (1) de réalisation du type gobelet comprenant, pour l'essentiel, une partie intérieure (2) et une partie extérieure (3) en forme d'enveloppe, la partie intérieure (2) constituant un réceptacle en forme de cuvette ou de calice, et la partie extérieure (3) entourant au moins partiellement ladite partie intérieure (2), laquelle partie intérieure (2) est fabriquée en une ou plusieurs pièce(s) en un matériau apte au moulage, notamment apte au thermoformage et/ou à l'emboutissage profond, sachant que ledit matériau peut se présenter au moins en partie, outre comme des matières plastiques classiques, également comme un matériau produit à partir de matières premières renouvelables, biodégradables et/ou recyclées, et sachant que la partie extérieure (3) ceinture au moins le pourtour de la partie intérieure (2), au moins partiellement, et est de préférence fabriquée, outre en des matériaux classiques, en une matière première renouvelable, biodégradable et/ou recyclée, la préférence étant accordée à des matériaux renfermant des fibres, au moins ladite partie intérieure (2) étant munie, à son extrémité respectivement supérieure ou ouverte, d'un rebord (6) ourlé observé en coupe transversale, la section transversale dudit rebord (6) décrivant un cercle ou un segment de cercle, **caractérisé par le fait que** le rebord ourlé (6) comporte une région aplatie, à sa face supérieure, cette région aplatie pouvant recevoir un joint de scellement entre le gobelet et un film d'operculage ou un couvercle apte à obturer ledit gobelet.

2. Récipient d'emballage selon la revendication 1, **caractérisé par le fait qu'**un couvercle (8) ou un film d'operculage est scellé et/ou déposé, respectivement clipsé sur le rebord (6).

3. Récipient d'emballage selon l'une des revendications précédentes, **caractérisé par le fait qu'**à la fois la partie intérieure (2), et la partie extérieure (3), sont pourvues d'un rebord ourlé (6).

4. Procédé de fabrication d'un récipient d'emballage conforme à l'une des revendications précédentes, **caractérisé par le fait que** la combinaison d'une partie intérieure (2) et d'une partie extérieure (3) est formée dans un premier temps, le rebord ourlé (6) étant mis en forme au stade successif ; ou **par le fait que** ledit rebord (6) est mis en forme dans un premier temps, après quoi ladite partie extérieure (3) et ladite partie intérieure (2) sont assemblées, une région aplatie étant formée dans ledit rebord ourlé (6), dans l'un et l'autre cas, à la face supérieure de ce dernier.

5. Procédé selon la revendication 4, **caractérisé par le fait que** la partie intérieure (2) et la partie extérieure (3) sont mises en forme séparément, puis assemblées au stade successif.

6. Procédé selon la revendication 4, **caractérisé par le fait que** la partie intérieure (2) est mise en forme intérieurement dans la partie extérieure (3) préalablement mise en forme, les deux parties étant ainsi assemblées.

7. Procédé selon la revendication 6, **caractérisé par le fait que** la partie extérieure (3) du récipient d'emballage (1) est fixée à la partie intérieure (2) au stade du rabat circulaire du rebord (6).

8. Procédé selon la revendication 7, **caractérisé par** un rabat circulaire conjoint, au moins partiel, de la partie extérieure (3).

9. Procédé selon l'une des revendications 6 à 8, **caractérisé par le fait qu'**une rainure de coincement, dédiée à la partie extérieure (3), est formée entre le rebord (6) et la partie intérieure (2).

10. Procédé selon la revendication 9, **caractérisé par le fait que** la partie extérieure (3) est enfoncée dans la rainure de coincement par coulissement de ladite partie vis-à-vis de la partie intérieure (2).
